# EUROPÄISCHE PATENTSCHRIFT

(11) **EP 0 413 012 B1**
(45) Veröffentlichungstag und Bekanntmachung des Hinweises auf die Patenterteilung: **01.06.1994**
(21) Anmeldenummer: 90902996.9
(22) Anmeldetag: 19.02.1990
(51) Int. Cl.: A63H 33/10, F16B 19/00, F16B 21/02

(54) **LÖSBARE VERBINDUNGSVORRICHTUNG FÜR SPIELZEUG-BAUELEMENTE**
RELEASABLE CONNECTING DEVICE FOR TOY BUILDING BLOCKS
DISPOSITIF DE LIAISON LIBERABLE POUR ELEMENTS DE JEUX DE CONSTRUCTION

(30) Priorität: 24.02.1989 CH 679/89
(43) Veröffentlichungstag der Anmeldung: 20.02.1991
(73) Patentinhaber: Interlego AG, CH-6340 Baar (CH); LEGO A/S, DK-7190 Billund (DK)
(72) Erfinder: BOLLI, Peter, CH-6312 Steinhausen (CH); LOOSER, Heinz, CH-6340 Baar (CH)
(74) Vertreter: Münch, Otto
(86) Internationale Anmeldenummer: CH9000037
(87) Internationale Veröffentlichungsnummer: WO9009827

(56) Entgegenhaltungen:
- CH-A- 0 591 638
- CH-A- 0 609 752
- CH-A- 0 655 247
- CH-A- 0 658 887
- DE-A- 1 400 846
- DE-A- 2 047 185
- DE-A- 2 115 564
- DE-A- 2 125 734
- DE-A- 2 335 023
- GB-A- 1 187 430
- GB-A- 1 270 540
- US-A- 3 112 547

## Beschreibung

Die Erfindung bezieht sich auf eine lösbare Verbindungsvorrichtung zur Verbindung mindestens zweier Spielzeug-Bauelemente, die je eine Bohrung aufweisen, mit einer zur Einführung in die Bohrung der Bauelemente bestimmten Hülse, welche einen zylindrischen Schaftabschnitt und in ihrem einen Endteil zur Erzielung einer radialen Elastizität Längsschlitze aufweist und welche am freien Ende dieses Endteils einen radial vorstehenden, schmalen, äusseren Randwulst aufweist, der dazu bestimmt ist, nach dem Einführen der Hülse in die Bohrung der Bauelemente das eine Bauelement formschlüssig zu hintergreifen, sowie mit einem Anlageflansch an dem dem Randwulst abgewandten Ende des zylindrischen Schaftabschnitte.

Eine lösbare Verbindungsvorrichtung der eingangs genannten Art ist aus der schweizerischen Patentschrift Nr. 655 247 bekannt. Gemäss dieser Patentschrift sind zwei miteinander zu verbindende Spielzeug-Bauelemente, die je eine zylindrische Bohrung aufweisen, mittels einer durch beide Bohrungen gehenden, im wesentlichen zylindrischen Hülse verbunden. Die Hülse weist in einem ihrer Endbereiche zwei Längsschlitze auf, welche eine radiale Elastizität dieses Endbereichs bewirken. Zudem ist die Hülse am geschlitzten Ende mit einem radial äusseren Randwulst versehen. Im gegenüberliegenden Endbereich weist die Hülse einen äusseren, ringförmigen Flansch auf. Zudem sind die beiden, miteinander zu verbindenden Bauelemente an den Aussenseiten ihrer Bohrungen mit je einer ringförmigen Ausnehmung versehen. Zur Verbindung der beiden aufeinanderliegenden Bauelemente wird die Hülse mit dem Randwulstende durch die Bohrung der beiden Bauelemente geschoben, was wegen der radialen Elastizität des geschlitzten Endbereichs der Hülse ohne weiteres möglich ist. In der Endlage der Hülse rastet der Randwulst der Hülse in die ringförmige Ausnehmung des einen Bauelementes ein, während der ringförmige Flansch der Hülse in die ringförmige Ausnehmung des anderen Bauelementes zu liegen kommt, so dass die beiden Bauelemente durch die Hülse zusammengehalten sind.

Eine weitere Ausführungsform einer lösbaren Verbindungsvorrichtung der eingangs genannten Art ist zudem aus der schweizerischen Patentschrift Nr. 658 887 bekannt. Gemäss dieser Patentschrift ist eine Hülse der vorbeschriebenen Art als Doppelhülse ausgebildet, indem die Hülse an ihren beiden Enden geschlitzt ist und einen äusseren Randwulst aufweist, wobei der erwähnte ringförmige Flansch in der Längsmitte der Hülse angebracht ist. Eine solche Hülse dient dazu, zwei Bauelemente, deren Bohrungsenden auf beiden Wandseiten jedes Bauelementes mit ringförmigen Ausnehmungen versehen sind, miteinander lösbar zu verbinden.

Diese bekannten und handelsüblichen Verbindungsvorrichtungen sind dadurch lösbar, dass die beiden miteinander verbundenen Bauelemente voneinander abgezogen werden, was unter Ueberwindung der Federkraft des geschlitzten und deshalb elastischen Endes der Hülse mit dem Randwulst ohne weiteres möglich ist. Nachteilig ist in diesem Zusammenhang jedoch, dass ein solches Lösen der Verbindung auch unbeabsichtigt und in unerwünschter Weise eintreten kann, wenn bei einer Betriebsweise einer die verbundenen Bauelemente enthaltenden Baukonstruktion eine die beiden Bauelemente trennende Kraft zur Wirkung kommt.

Es ist deshalb Aufgabe der Erfindung, eine lösbare Verbindungsvorrichtung der eingangs genannten Art zu schaffen, welche mit einfacher Betätigung eine eindeutige, feste Verriegelung der Hülse bzw. eine eindeutige Entriegelung der Hülse in den durch sie verbundenen Bauelementen ermöglicht.

Diese Aufgabe wird dadurch gelöst, dass in die Hülse ein bolzenförmiges Verriegelungselement unverlierbar eingesetzt ist, das relativ zur Hülse in zwei Stellungen bewegbar ist, wobei in der ersten Stellung ein Endabschnitt am freien Ende des Verriegelungselementes die Innenfläche der Hülse im Bereich der Radialebene des Randwulstes von innen berührt und in der zweiten Stellung von der Innenfläche der Hülse im Bereich der Radialebene des Randwulstes Abstand hat.

Aus der schweizerischen Patentschrift Nr. 609 752 ist an sich ein Befestiger zum lösbaren Verbinden zweier Bleche bekannt. Der Befestiger besteht aus einer Durchführungsöse und einem über Sollbruchstellen einstückig mit der Oese spritzgegossenen Stiftteil. Im Ausgangszustand ist das Stiftteil axial aus einer zentralen Bohrung der Oese ausgefahren. Die Oese hat an ihrem einen Ende einen Anlageflansch. Anschliessend an den Flansch hat sie eine im Querschnitt und im Axialschnitt rechteckige Umfangsnut. An die Umfangsnut schliessen zwei im Querschnitt rechteckige Spreizbacken an, die an ihrem freien Ende keilförmig verjüngt sind. Der Querschnitt der Spreizbacken überragt allseitig den Querschnitt der Umfangsnut. Zur Montage wird der Befestiger zunächst durch eine rechteckige Oeffnung im ersten Blech gesteckt, deren Querschnittsabmessungen grösser als der Querschnitt der Nut aber kleiner als der Querschnitt der Spreizbacken ist. Weil das Stiftteil noch aus der zentralen Bohrung der Oese entfernt ist, können die Spreizbacken einfedern, so dass das erste Blech in der Nut einschnappt. Anschliessend wird der Stiftteil nach Durchtrennen der Sollbruchstellen axial in die zentrale Bohrung eingeschoben, wo er durch ein Schnappelement axial unverschiebbar gehalten wird und damit die Oese permanent am ersten Blech sichert. Die Spreizbacken können nun durch eine grössere, ebenfalls rechteckige Oeffnung des zweiten Blechs gesteckt werden. Ein rechteckiger Endabschnitt des Stiftteils greift zwischen die beiden Spreizbacken. Durch Verdrehen des Stiftteils können die beiden Spreizbacken aus ihrer ungespannten Lage auseinander gespreizt werden, so dass ihre Seitenwände in der Oeffnung des zweiten Blechs kraftschlüssig geklemmt werden.

Dieser bekannte Befestiger eignet sich nicht für Spielzeug-Bauelemente, weil er am ersten Blech permanent eingeschnappt ist, und weil er zwei unterschiedliche Lochgrössen der beiden Bleche voraussetzt. Der Befestiger eignet sich nicht zum Zentrieren der beiden Bleche zueinander, weil das erste Blech in der Nut Spiel hat. Die beiden Bleche müssen also durch zusätzliche Teile gegeneinander zentriert werden. Weil die Spreizbacken in der Oeffnung des zweiten Bleches nur kraftschlüssig angreifen, ist eine präzise aneinander anliegende Position der beiden Blech nicht gewährleistet. Wenn der Befestiger längere Zeit in der gespreizten Lage der Spreizbacken verbleibt, verlieren diese durch Kriechen des Kunststoff-Materials ihre Eigenschaft, in die Ausgangslage zurückzufedern. Wenn unter diesen Umständen das Stiftteil in die Entsperr-Stellung zurückgedreht wird, verbleiben die Spreizbacken in ihrer gespreizten Lage und der Befestiger kann nur noch mit Mühe und selten ohne Zerstörung aus der Oeffnung des zweiten Blechs entfernt werden. Ein weiterer Nachteil dieses bekannten Befestigers besteht darin, dass er auf der Rückseite des zweiten Blechs erheblich vorsteht. Dies macht ihn zur Verwendung mit Spielzeug-Bauelementen zusätzlich ungeeignet.

Ein ähnlicher Befestiger mit den gleichen Nachteilen ist aus der schweizerischen Patentschrift Nr. 591 638 bekannt. Im Unterschied zum zuvor erwähnten Befestiger wird hier das Stiftteil zwischen Sperrstellung und Dreigabestellung axial verschoben, statt gedreht. Die beiden unterschiedlich grossen Oeffnungen in den zu verbindenden Blechen sind hier zylindrisch statt rechteckig.

Im Gegensatz zu diesen vorbekannten Befestigern kann die erfindungsgemässe Vorrichtung aus beiden Bauteilen leicht entfernt werden. Im Gegensatz zu den bekannten Befestigern sind die beiden Bauteile radial und axial exakt zueinander positioniert, weil der zylindrische Schaftabschnitt die beiden Bauteile relativ zueinander zentriert und der schmale Randwulst das zweite Bauteil formschlüssig hintergreift. Der schmale Randwulst steht nicht vor, so dass er die Anordnung weiterer Bauelement beim Bauen nicht behindert. Weil das radial elastische Endteil der Hülse in der verriegelten Stellung des Verriegelungselementes in seiner ungespannten Lage gesichert ist, führt auch ein längeres Verbleiben in dieser verriegelten Stellung nicht zum Kriechen des Materials und die Verbindungsvorrichtung kann deshalb sowohl in der unverriegelten als auch in der verriegelten Stellung beliebig lange fixiert bleiben.

Die Erfindung bezieht sich auch auf Spielzeug-Bauelemente für eine lösbare erfindungsgemässe Verbindungsvorrichtung, mit mindestens einer zylindrischen Bohrung zur Aufnahme der zylindrischen Hülse der Verbindungsvorrichtung. Das erfindungsgemässe Bauelement weist die im Patentanspruch 13 angeführten Merkmale auf.

Ausführungsbeispiele der Erfindungsgegenstände werden nachstehend anhand der Zeichnungen erläutert. Es zeigen:
- Fig. 1: einen Längsschnitt durch eine Hülse eines ersten Ausführungsbeispiels der erfindungsgemässen Verbindungsvorrichtung;
- Fig. 2: eine perspektivische Ansicht auf die eine Seite der Hülse der Fig. 1;
- Fig. 3: einen Längsschnitt durch ein Verriegelungselement der Verbindungsvorrichtung;
- Fig. 4: eine perspektivische Ansicht auf die eine Seite des Verriegelungselementes der Fig. 3;
- Fig. 5: eine perspektivische Ansicht auf die eine Seite der Verbindungsvorrichtung mit der Hülse nach Fig. 2 und dem eingesteckten Verriegelungselement nach Fig. 4;
- Fig. 6: eine perspektivische Ansicht auf die andere Seite der Verbindungsvorrichtung nach Fig. 5;
- Fig. 7: einen Schnitt durch zwei verbundene, gemäss einer ersten Ausführungsform ausgebildete Bauelemente und durch die Verbindungsvorrichtung gemäss den Fig. 1 bis 6 beim Einführen der Verbindungsvorrichtung in die Bohrungen der Bauelemente;
- Fig. 8: eine stirnseitige Ansicht auf die Verbindungsvorrichtung der Fig. 7 mit Angabe der Linie VII-VII des Schnitts der Fig. 7;
- Fig. 9: einen Schnitt entsprechend Fig. 7 in einer nachfolgenden Lage der Verbindungsvorrichtung in den Bohrungen der Bauelemente;
- Fig. 10: eine strinseitige Ansicht auf die Verbindungsvorrichtung der Fig. 9 mit Angabe der Linie IX-IX des Schnitts der Fig. 9;
- Fig. 11: einen Schnitt entsprechend Fig. 7 und 9 in der verriegelten Lage der Verbindungsvorrichtung in den Bohrungen der Bauelemente;
- Fig. 12: eine stirnseitige Ansicht auf die Verbindungsvorrichtung der Fig. 11 mit Angabe der Linie XI-XI des Schnitts der Fig. 11;
- Fig. 13: eine stirnseitige Ansicht auf eine zweite Ausführungsform;
- Fig. 14: einen Schnitt durch zwei mit einer dritten Ausführungsform verbundene Bauelemente;
- Fig. 15: einen Längsschnitt durch eine Hülse einer vierten Ausführungsform der Verbindungsvorrichtung;
- Fig. 16: eine perspektivische Ansicht auf die eine Seite der Hülse der Fig. 15;
- Fig. 17: einen Längsschnitt eines Verriegelungselementes der Verbindungsvorrichtung nach Fig. 15 und 16;
- Fig. 18: eine perspektivische Ansicht auf die eine Seite des Verriegelungselementes der Fig. 17;
- Fig. 19: eine perspektivische Ansicht auf die eine Seite der Verbindungsvorrichtung mit der Hülse nach Fig. 16 und dem eingesteckten Verriegelungselement nach Fig. 18;
- Fig. 20: eine perspektivische Ansicht auf die andere Seite der Verbindungsvorrichtung nach Fig. 19;
- Fig. 21: einen Schnitt durch zwei zu verbindende Bauelemente und eine Verbindungsvorrichtung gemäss den Fig. 15 bis 20 beim Einführen der Verbindungsvorrichtung in die Bohrungen der Bauelemente;
- Fig. 22: einen Schnitt entsprechend Fig. 21 in einer nachfolgenden Lage der Verbindungsvorrichtung in den Bohrungen der Bauelemente;
- Fig. 23: einen Schnitt entsprechend Fig. 21 und 22 in der verriegelten Lage der Verbindungsvorrichtung in den Bohrungen der Bauelemente;
- Fig. 24: einen Schnitt durch eine weitere Ausführungsform der erfindungsgemässen Verbindungsvorrichtung mit einer abdichtenden Kappe;
- Fig. 25: eine perspektivische Ansicht eines mit der erfindungsgemässen Verbindungsvorrichtung beispielsweise verwendbaren Bauelementes in der Form eines Stabes;
- Fig. 26: eine perspektivische Ansicht auf die eine Seite eines mit der erfindungsgemässen Verbindungsvorrichtung verwendbaren Bauelementes in der Form eines Bausteins,
- Fig. 27: eine perspektivische Ansicht auf die andere Seite des Bausteins der Fig. 26, und
- Fig. 28: eine perspektivische Ansicht eines stabförmigen, mit mehreren zylindrischen Bohrungen versehenen Bauelements, das zur Verwendung mit der Verbindungsvorrichtung gemäss den Fig. 1 bis 6 ausgebildet ist.

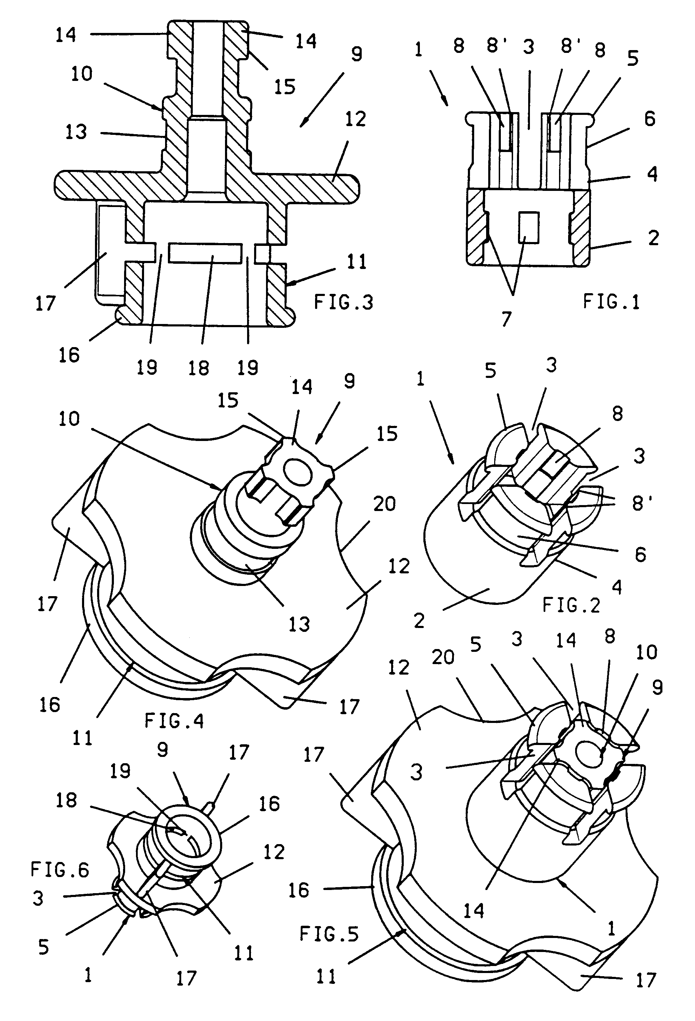

Die in Fig. 1 und 2 dargestellte Hülse 1 der erfindungsgemassen Verbindungsvorrichtung weist einen starren, zylindrischen Teil 2 und einen mit vier Längsschlitzen 3 versehenen und deshalb radial elastischen Teil 4 auf, wobei die Längsschlitze 3 in Winkelabständen vom 90° liegen. Der elastische Teil 4 ist an seinem Ende mit einem äusseren, ebenfalls geschlitzten Randwulst 5 versehen. Zudem hat der elastische Teil 4 eine Umfangsnut 6 verminderten äusseren Durchmessers, die die radiale Elastizität des Hülsenendes sicherstellt und eine Federung des Hülsenendes radial nach aussen ermöglicht. Die achsiale Länge der Umfangsnut 6 ist kleiner als die Länge des Teils 2. Im Bereich des starren Teils 2 der Hülse 1 ist deren zylindrische Innenwand mit vier rechteckigen Vorsprüngen 7 versehen. Im Bereich des elastischen Teils 4 weist die Innenwand vier rechteckige Ausnehmungen 8 auf, die sich bis zu dem mit dem Randwulst 5 versehenen Hülsenende erstrecken, und in Umfangsrichtung beidseitig durch nach radial innen ragende Vorsprünge 8' begrenzt sind.

Ein in den Fig. 3 und 4 dargestelltes Verriegelungselement 9 weist einen Steckerteil 10 und einen Handgriff 11 auf, welcher über einen tellerartigen Flansch 12 mit dem Steckerteil 10 einstückig ausgebildet ist. Wie insbesondere aus Fig. 4 ersichtlich ist, weist der Steckerteil 10 einen ersten, im wesentlichen zylindrischen Abschnitt auf, der mit einer ringförmigen Ausnehmung oder Nut 13 versehen ist, in welche die rechteckigen Vorsprünge 7 der Hülse 1 der Fig. 1 und 2 passen. An diesen zylindrischen Abschnitt schliesst sich ein zweiter Abschnitt als Endbereich an, der mit vier Längsrippen 14 versehen ist. Die Längsrippen 14 haben ebene Aussenflächen 15, welche bezüglich Breite, Länge und radialer Abmessung in die rechteckigen Ausnehmungen 8 der Hülse 1 der Fig. 1 und 2 passen. Der Handgriff 11 ist hülsenförmig ausgebildet und weist zu seiner axialen Betätigung einen äusseren Randwulst 16 und zu seiner Drehbetätigung zwei Flügel 17 auf. Die zylindrische Innenwand des Handgriffs 11 ist mit vier ringförmigen Nutabschnitten 18 versehen, die jeweils durch in Umfangsrichtung kürzere Abschnitte 19 der zylindrischen Innenwand des Handgriffs 11 getrennt sind. Die Breite dieser kürzeren Abschnitt 19 ist hierbei höchstens gleich der Breite der Längsschlitze 3 der Hülse 1 der Fig. 1 und 2. Die Bedeutung der angeführten Abschnitte 18 und 19 an der Innenwand des Handgriffs 11 wird später erläutert. Schliesslich weist der tellerartige Flansch 12 kreisförmige Einschnitte 20 auf, die nur eine ästhetische und die Handhabung erleichternde Funktion ausüben.

Zur Bildung der erfindungsgemässen Verbindungsvorrichtung wird der Steckerteil 10 des Verriegelungselements 9 (Fig. 3, 4) in die Hülse 1 (Fig. 1, 2) gesteckt. Hierbei rasten die radial inneren Vorsprünge 7 der Hülse 1 nach Ueberwindung eines gewissen elastischen Widerstandes in die ringförmige Ausnehmung 13 des Steckerteils 10 des Verriegelungselements 9 ein. In diesem Zustand sind die Hülse 1 und das Verriegelungselement 9 in axialer Richtung gegeneinander nicht mehr verschiebbar, jedoch gegeneinander verdrehbar. Die axialen Längen der Hülse 1 und des Steckerteils 10 des Verriegelungselements 9 sind zudem derart aufeinander abgestimmt, dass im erwähnten Zustand der axialen Verrastung der Hülse 1 mit dem Verriegelungselement 9 einerseits der dem Randwulst 5 gegenüber liegende Rand der Hülse 1 auf dem tellerartigen Flansch 12 des Verriegelungselements 9 aufliegt, und andererseits die endseitige Stirnfläche des Steckerteils 10 des Verriegelungselements 9 mit der endseitigen Stirnfläche des Randwulstes 5 der Hülse 1 bündig ist.

In den Fig. 5 und 6 sind perspektivische Ansichten auf die beiden Seiten der Verbindungsvorrichtung nach dem beschriebenen Einstecken des Verriegelungselemts 9 in die Hülse 1 dargestellt. Insbesondere ist aus Fig. 5 ersichtlich, dass die Längsrippen 14 des Steckerteils 10 des Verriegelungselements 9 in radialer Richtung in den inneren Teil der Längsschlitze 3 der Hülse 1 zu liegen kommen. Da die radiale Abmessung der Längsrippen 14 um einen kleinen Betrag grösser ist als der Radius des zylindrischen, geschlitzten und elastischen Teils 4 der Hülse 1, ergibt sich die in Fig. 5 dargestellte Drehlage des Verriegelungselements 9 bezüglich der Hülse 1 beim Einstecken des Verriegelungselements 9 in die Hülse 1 zwangslos, da hierbei der geringste mechanische Widerstand zu überwinden ist.

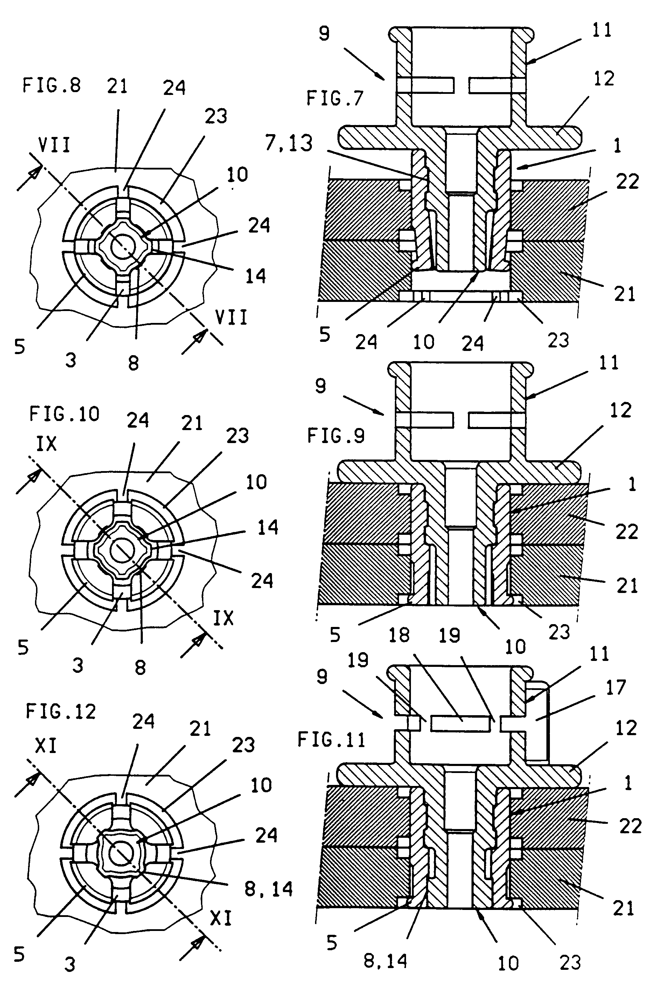

Anhand der Fig. 7 bis 12 werden nun in Längsschnitten und stirnseitigen Ansichten die Vorgänge beim Verbinden von zwei stabförmigen Bauelementen 21 und 22 (Fig. 7, 9, 11) mit je einer durchgehendenden Bohrung mittels der in den Fig. 1 bis 6 dargestellten Verbindungsvorrichtung erläutert. Hierbei sind die beiden Bauelemente 21, 22 in an sich bekannter Weise beidseitig an ihren Bohrungsenden mit einer ringförmigen Ausnehmung 23 versehen. Abweichend von der an sich bekannten Ausbildung der ringförmigen Ausnehmungen 23 an den Bohrungsenden der Bauelemente 21, 22 sind hier diese Ausnehmungen 23 mit vier in Winkelabständen von 90° angeordneten, angeformten Nocken 24 versehen, welche sich in den Ausnehmungen 23 in radial innerer Richtung bis zur zylindrischen Innenwand der Bohrung erstrecken und in Umfangsrichtung eine Breite von höchstens der Breite der Längsschlitze 3 der Hülse 1 haben. Aus den Fig. 8, 10 und 12 sind diese Nocken 24 ersichtlich.

In den Fig. 7 und 8 ist eine erste Lage der aus der Hülse 1 und dem Verriegelungselement 9 bestehenden Verbindungsvorrichtung beim Einschieben in die Bohrungen der beiden zu verbindenden Bauelemente 21 und 22 dargestellt. Wie aus Fig. 7 hervorgeht, ist das stöpselförmige Verriegelungselement 9 bereits in die Hülse 1 eingesteckt, wie dies vorgängig erläutert wurde, und in dieser Lage aufgrund der Vorsprünge 7 der Hülse 1 und der Ausnehmungen 13 des Steckerteils 10 des Verriegelungselements 9 axial untrennbar, aber drehbar festgehalten. Beim Einschieben der Verbindungsvorrichtung in die Bohrungen der Bauelemente 21 und 22 gemäss Fig. 7 durch eine axiale Kraftausübung auf den Handgriff 11 des Verriegelungselements 9 verschiebt sich demnach auch die Hülse 1 in den genannten Bohrungen, was dadurch ermöglicht wird, dass gemäss den Fig. 5, 7 und 8 der Randwulst 5 der Hülse 1 elastisch radial nach innen drückbar ist.

Bei fortschreitender Längsbewegung gelangt die Hülse 1 in die in Fig. 9 dargestellte Endlage, in welcher
- der Randwulst 5 der Hülse 1 in die aussenseitige Ausnehmung 23 des Bauelements 21 elastisch eingerastet ist;
- die in der Ausnehmung 23 angeformten Nocken 24 in den Längsschlitzen 3 der Hülse 1 liegen; und
- der Flansch 12 des Verriegelungselements 9 auf der gegenüber liegenden Aussenseite des Bauelements 22 aufliegt.
In dieser Lage sind die Bauelemente 21 und 22 durch die Hülse 1 zwar miteinander verbunden, wie dies an sich vorbekannt ist; eine Trennung der Bauelemente 21, 22 wäre jedoch mit geringer axialer Kraftausübung in nachteiliger Weise möglich.

Zur Sicherung oder Verriegelung der durch die Hülse 1 bewirkten Verbindung der Bauelemente 21, 22 wird nun das Verriegelungselement 9 in seiner Lage gemäss den Fig. 9 und 10 im Uhrzeigersinn oder Gegenuhrzeigersinn durch Betätigung seines Handgriffs 11 gedreht. Dabei ist die Hülse 1 in der Drehrichtung in den Bauelementen 21, 22 festgehalten, da die Nocken 24 des Bauelemente 21 in die Längsschlitze 3 der Hülse 1 greifen. Somit dreht sich nur das Verriegelungselemnt 9 mit seinem in der Hülse 1 liegenden Steckerteil 10.

Bei der Drehbewegung des Handgriffs 11 und der damit bewirkten Drehbewegung des Steckerteils 10 des Verriegelungselements 9 gelangen die Längsrippen 14, wie aus Fig. 5 ersichtlich, in Berührung mit der zylindrischen, geschlitzten Innenfläche der Hülse 1 und drücken hierbei die einzelnen, mit dem Randwulst 5 versehenen Segmente der Hülse 1 radial nach aussen. Dies ist durch die Umfangsnut 6 und dadurch ermöglicht, dass der Randwulst 5 in die Ausnehmung 23 des Bauelements 21 ausweichen kann. Bei fortgesetzter Drehbewegung schnappen die Längsrippen 14 in die formmässig entsprechenden, rechteckigen Ausnehmungen 8 der Innenwand der Hülse 1 ein, was beim Drehen des Handgriffs 11 sowohl spürbar als auch hörbar ist. Gleichzeitig schnappt der mit den Schlitzen 3 versehene elastische Teil 4 der Hülse 1 in seine zylindrische, ungespannte Lage zurück, wie dies in den Fig. 11 und 12 dargestellt ist.

In dieser Lage, vgl. Fig. 11, greift der Randwulst 5 der Hülse 1 immer noch in die Ausnehmung 23 des Bauelements 21. Da jedoch ein radiales Zusammenfedern des elastischen Teils 4 und insbesondere des Wulstrandes 5 der Hülse 1 unmöglich ist, weil die Längsrippen 14 des starren Steckerteils 10 des Verriegelungselements 9 eine solche radiale Bewegung verhindern, ist die Hülse 1 in den Bauelementen 21, 22 fest verankert. Dies ist auch der Fall, weil in der beschriebenen Lage das Verriegelungselement 9 wegen der axial festen Verbindung über die Vorsprünge 7 der Hülse 1 und die ringförmige Ausnehmung 13 des Verriegelungselements 9 nicht aus der Hülse 1 gezogen oder bewegt werden kann.

Zum Lösen der in Fig. 11 dargestellten Verbindung der Bauelemente 21 und 22 ist nur die Massnahme möglich, das Verriegelungselement 9 mittels des Handgriffs 11 im Uhrzeigersinn oder Gegenuhrzeigersinn um weitere 45° zu drehen, so dass die Längsrippen 14 des Verriegelungselements 9 erneut den Längeschlitzen 3 der Hülse 1 gegenüberliegen und in diese hineinragen, wie dies in den Fig. 9 und 10 dargestellt ist. Dann kann das Verriegelungselement 9 mitsamt der Hülse 1 aus den Bohrungen der Bauelemente 21, 22 gezogen werden, wodurch die Bauelemente wieder voneinander getrennt sind.

Es ist vorgängig bereits angeführt worden, dass die zylindrische Innenwand des nach aussen offenen Handgriffe 11 mit vier ringförmigen Nutabschnitten 18 versehen ist, die durch kürzere Abschnitte 19 der zylindrischen Innenwand des Handgriffs 11 voneinander getrennt sind. Der Zweck dieser Ausgestaltung des zylindrischen Hohlraums des Handgriffe 11 ist derjenige, den Randwulst 5 der Hülse 1 einer weiteren Verbindungsvorrichtung der vorliegenden Art aufnehmen zu können. Wenn eine Verbindungsvorrichtung, wie sie beispielsweise in Fig. 5 dargestellt ist, in den Hohlraum des Handgriffe 11 gemäss Fig. 3 und 6 gesteckt wird, rastet der geschlitzte Randwulst 5 der Hülse 1 dieser zweiten Verbindungsvorrichtung in die Nutenabschnitte 18 des Handgriffe 11 der ersten Verbindungevorrichtung ein. Hierbei üben die kürzeren Abschnitte 19 der zylindrischen Innenwand des Handgriffe 11 der ersten Verbindungsvorrichtung die gleiche Funktion aus wie die vorbeschriebenen Nocken 24 in der Ausnehmung 23 des Bauelemente 21 (Fig. 8, 10, 12), das heisst, durch Eingriff in die Längsschlitze 3 der Hülse 1 verhindern sie eine Drehbewegung der Hülse 1, wenn das Verriegelungselement 9 verdreht wird, um die Hülse 1 zu verriegeln. Die Nutabschnitte 18 und die trennenden Abschnitte 19 erlauben es deshalb, auf eine Verbindungsvorrichtung gemäss den Fig. 7, 9 und 11 eine weitere Verbindungsvorrichtung gleicher Art für weitere Bauelemente aufzustecken.

Anhand der Fig. 7 bis 12 sind vorgängig Ausführungsformen der erfindungsgemässen Verbindungsvorrichtung und mit diesem Verbindungselement verwendbarer Bauelemente beschrieben worden. Diese Ausführungsformen beruhen darauf, dass ein Verdrehen der in die Bohrungen der Bauelemente gesteckten Hülse 1 der Verbindungsvorrichtung bei dem durch Drehen des Verriegelungselements 9 der Verbindungsvorrichtung bewirkten Verriegelungsvorgang dadurch verhindert ist, dass radiale Nocken 24 des einen Bauelemente 21 in die endseitigen Längsschlitze 3 der Hülse 1 zu liegen kommen. Nachstehend werden weitere Ausführungsformen der Verbindungsvorrichtung und der Bauelemente beschrieben, bei welchen die erforderliche Verdrehsicherung durch andere Ausbildung der Verriegelungsvorrichtung und/oder der Bauelemente bzw. durch andere Mittel als diejenigen der Fig. 7 bis 12 erzielt wird.

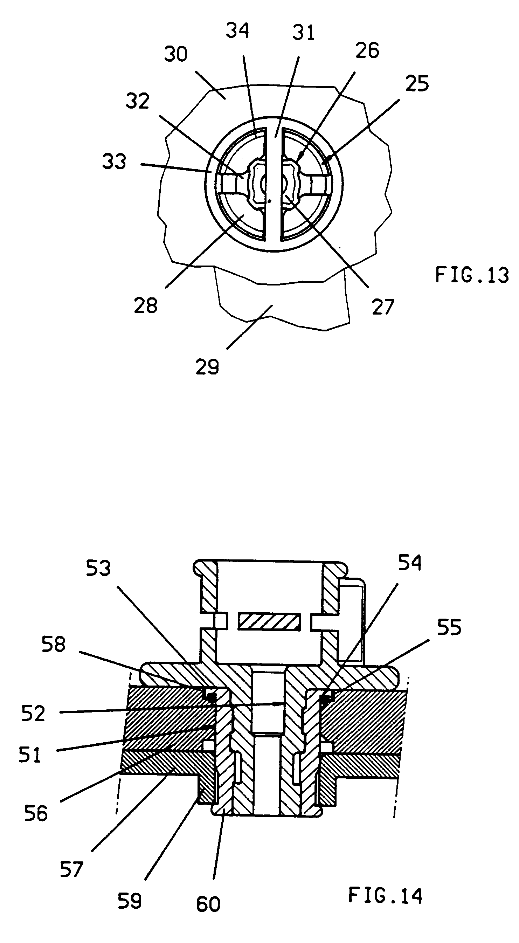

Bei einer in Fig. 13 dargestellten Variante besteht die Verbindungsvorrichtung wiederum aus einer Hülse 25 und einem in die Hülse 25 gesteckten Verriegelungselement 26, das in der Hülse 25 drehbar, aber in axialer Richtung fest gelagert ist.
Sowohl die Hülse 25 als auch das Verriegelungselement 26 sind praktisch gleich ausgebildet wie die Hülse 1 bzw. das Verriegelungselement 9 der Fig. 1 bis 12. Unterschiedlich ist einzig, dass die äussere Endfläche 27 des Verriegelungselements 26 gegenüber der äusseren Endfläche 28 der Hülse 25 nach innen zurückversetzt ist, während bei der Ausführungsform gemäss den Fig. 5, 7, 9 und 11 diese Endflächen in der gleichen Ebene liegen. Es erübrigt sich deshalb, die Hülse 25 und das Verriegelungselement 26 der Fig. 13 nochmals im einzelnen zu erläutern.

Wesentlich unterschiedlich gegenüber den Fig. 7 bis 12 ist jedoch bei der vorliegenden Ausführungsform das eine Bauelement 30 der beiden durch die Verbindungsvorrichtung mit der Hülse 25 und dem Verriegelungselement 26 miteinander verbundenen Bauelemente 29 und 30 ausgebildet. Das Bauelement 29 entspricht dem Bauelement 22 der Fig. 7, 9 und 11. Das Bauelement 30 weist jedoch statt der radialen Nocken 24 einen sich diametral ererstreckenden Quersteg 31 auf, dessen Breite höchstens gleich der Breite und vorzugsweise etwas kleiner als die Breite der Längsschlitze 32 der Hülse 25 ist. Im übrigen ist auch das Bauelement 30 wiederum mit einer ringförmigen Ausnehmung 33 versehen, in welche der Randwulst 34 der Hülse 25 einrastet.

Es ist einzusehen, dass der Quersteg 31 der Fig. 13 als Verdrehsicherung für die Hülse 25 die gleiche Funktion ausübt wie die radialen Nocken 24 der Fig. 7, 8, 10 und 12 für die dortige Hülse 1, indem der Quersteg 31 beim vollständigen Einstecken der aus der Hülse 25 und dem Verriegelungselement 26 bestehenden Verbindungsvorrichtung in die Bohrungen der aufeinander liegenden Bauelemente 29 und 30 in zwei diametral gegenüberliegenden Längsschlitze 32 der Hülse 25 eingreift. Um diesen Eingriff zu ermöglichen, ist die Endfläche 27 des Verriegelungselementes 26 gegenüber der Endfläche 28 der Hülse 25 nach innen zurückversetzt. Der Quersteg 31 kann gegebenenfalls in axialer Richtung eine grössere Abmessung haben und als Querwand ausgebildet sein.

Schliesslich wird anhand der Fig. 14 noch eine weitere Variante einer Verdrehsicherung der Hülse beim Drehen des in der Hülse drehbeweglich angeordneten Verriegelungselementes bei der erfindungsgemässen Verbindungsvorrichtung erläutert. Bei dieser Variante beruht die Verdrehsicherung der Hülse auf dem Prinzip der Reibung.

Aus der Fig. 14 ist ersichtlich, dass die Verbindungsvorrichtung wiederum eine Hülse 51 und ein in der Hülse 51 drehbeweglich, aber axial fest gelagertes Verriegelungselement 52 umfasst. Von der Hülse 1 der Fig. 1 und 2 unterscheidet sich die Hülse 51 einzig dadurch, dass sie an ihrem nicht geschlitzten Ende mit einem kreisrunden Flansch 53 versehen ist. Das in der Hülse 51 gelagerte Verriegelungselement 52 stimmt mit dem Verriegelungselement 9 der Fig. 3 und 4 überein. Die Hülse 51 ist ferner an der Innenfläche des Flansches 53 mit einer ringförmigen Nut 54 versehen, in welcher ein elastischer Ring 55 mit hohem Reibungskoeffizienten aufgenommen ist, beispielsweise ein O-Ring.

Gemäss Fig. 14 verbindet die aus der Hülse 51 und dem Verriegelungselement 52 bestehende Verbindungsvorrichtung zwei Bauelemente 56 und 57, von welchen das eine Bauelement 56 ein mit ringförmigen Ausnehmungen 58 vesehener Stab und das andere Bauelement 57 ein Teil eines quaderförmigen Bausteins mit einem inneren Kragen 59 ist. Die Verbindungsvorrichtung ist vollständig in die Bohrungen der beiden Bauelemente 56 und 57 eingesteckt, so dass die Hülse 51 an ihrem einen, geschlitzten Ende mit dem Randwulst 60 über die Stirnfläche des Kagens 59 des Bauelementes 57 greift. Am anderen Ende der Hülse 51 drückt der Flansch 53 der Hülse 51 den elastischen Ring 55 auf eine Fläche der ringförmigen Ausnehmung 58 des Bauelementes 56. Der Ring 55 wirkt somit als Reibungselement und verhindert deshalb eine Drehbewegung der Hülse 51 innerhalb der Bohrung des Bauelements 56. Deshalb kann die dargestelle Verbindungsvorrichtung durch Drehen des Verriegelungselements 52 in der bereits erläuterten Weise verriegelt bzw. entriegelt werden, ohne dass sich die Hülse 51 mitdrehen würde.

Statt des als Baustein mit einem inneren Kragen 59 ausgebildeten Bauelements 57 sind natürlich auch andere Bauelement mit der Verbindungsvorrichtung nach der Fig. 14 verbindbar. Insbesondere kann das Bauelement 57 der gleiche Stab wie das Bauelement 56 sein. In jedem Fall ist von Vorteil, dass die Bauelemente praktisch beliebig verwendbar und kombinierbar sind, das heisst auch zum Durchstecken von Schäften geeignet sind, da ihre Bohrungen keine hindernde Vorsprünge aufweisen müssen. Etwas umständlich ist dagegen die Handhabung der Verbindungsvorrichtung nach der Fig. 14. Beim Einsetzen und bei der Verriegelung muss auf den Handgriff des Verriegelungselements 52 an erster Stelle ein verhältnismässig starker Druck ausgeübt werden, um den elastischen Ring 55 der Hülse 51 in der Ausnehmung 58 des Bauelements 56 zusammenzudrücken. Hierauf muss unter Aufrechterhaltung der Druckausübung der Handgriff des Verriegelungselements 52 gedreht werden, um die Hülse 51 zu verriegeln.

Die axiale Länge der beschriebenen Hülsen 1, 25, 51 der Fig. 11, 13 und 14 und die Dicke der in diesen Figuren mit den genannten Hülsen dargestellten Bauelemente 21, 22; 29, 30 und 56, 57 hängen natürlich miteinander zusammen, da ja die Bauelemente zwischen dem geschlitzten Randwulst der jeweiligen Hülse und dem Flansch des zugehörigen Verriegelungselements liegen müssen. Da jedoch in einem Bausatz normalerweise alle Bauelemente Abmessungen haben, die aus einem festen Baumodul des Bausatzes durch ganzzahliges Teilen oder Vervielfachen hergeleitet sind (also z.B. 1/4, 1/2, 3/4, 1, 2 ... usw.), ist die Anzahl erforderlicher Verbindungsvorrichtungen der vorliegenden Art mit unterschiedlichen Längen stark beschränkt. Allgemein kann deshalb bei Anwendung der vorliegenden Verbindungsvorrichtung in einem Bausatz mit normalisierten Bauelementen gesagt werden, dass die Länge der Hülse einschliesslich des geschlitzten Randwulstes gleich einem Vielfachen der kleinsten Dicke der Bauelemente sein soll. Falls bei einem Bauelement des Bausatzes die massgebliche Dicke des Bauelementes aus konstruktiven Gründen von der modulgebundenen Norm abweicht, wie dies beispielsweise beim Bauelement 57 der Fig. 14 der Fall ist, dann soll diese abweichende, kleinere Dicke des Bauelements zusammen mit der axialen Abmessung des Kragens 59 wieder die genannte minimale und normierte Dicke ergeben.

Aus den vorgängigen Erläuterungen verschiedener Ausführungsformen der erfindungsgemässen Verbindungsvorrichtung und der dazu passenden Bauelemente ist ersichtlich, dass bei einer Abwägung der jeweiligen Vor- und Nachteile die in den Fig. 1 bis 6 dargestellte und in den Fig. 7 bis 12 zusammen mit entsprechenden Bauelementen erläuterte Ausführungsform am vorteilhaftesten ist. Sie ermöglicht eine einfache Handhabung mittels eindeutiger Dreh- und Stossbewegung ohne jegliche Kraftanwendung, so dass sie auch für Kleinkinder unproblematisch ist. Zudem bleibt eine universelle Verbaubarkeit der erforderlichen Bauelemente voll erhalten, da die endflächigen Ausnehmungen 23 mit den radialen Nocken 24 (vgl. Fig. 7 bis 12) den Zusammenbau beliebiger Bauelemente und die Verwendung von Durchsteckschäften nicht beeinträchtigen.

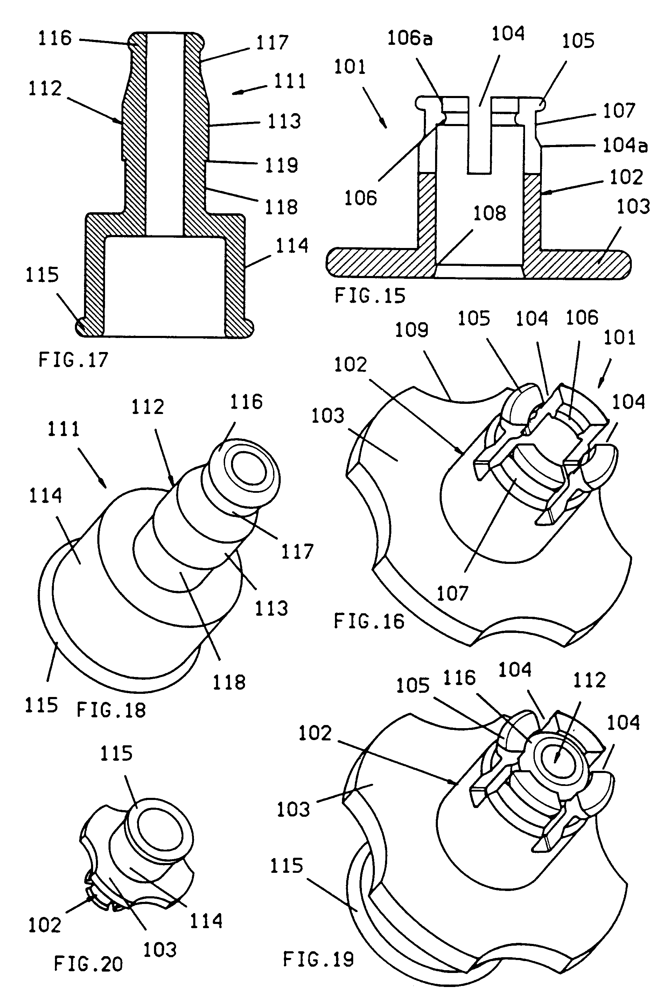

Die in den Fig. 15 und 16 dargestellte Hülse 101 der erfindungsgemässen Verbindungsvorrichtung weist einen im wesentlichen zylindrischen Hülsenteil 102 und einen daran angeformten, tellerartigen Flansch 103 auf. Das dem Flansch 103 abgewandte Endteil 104a der Hülse 101 ist mit vier Längsschlitzen 104 versehen, welche eine radiale Elastizität dieses Hülsenendes bewirken. An diesem Hülsenende sind am Hülsenteil 104a zudem ein äusserer Randwulst 105 sowie, in Längsrichtung versetzt, ein innerer ringförmiger Vorsprung 106 ausgebildet. Der Vorsprung 106 überragt eine zylindrische Innenfläche 106a am freien Ende des Endteils 104a radial nach innen. Das Hülsenende weist zwischen dem Randwulst 105 und der zylindrischen Hülsenteil 102 eine Umfangsnut 107 auf, welche die radiale Elastizität des Hülsenendes sicherstellt und eine Federung des Hülsenendes radial nach aussen ermöglicht. Am den Flansch 103 aufweisenden Ende der Hülse 101 ist die zylindrische Innenwand der Hülse 101 mit einem ringförmigen Vorsprung 108 versehen. Der tellerartige Flansch 103 weist kreisförmige Einschnitte 109 auf, die nicht nur eine ästhetische Funktion ausüben, sondern auch den Zweck haben, in Bauelementen, die gegebenenfalls mit vorstehenden Kupplungszapfen versehen sind, in die dazwischenliegende Bohrung die Verbindungsvorrichtungen einzuführen.

In den Fig. 17 und 18 ist ein stöpselförmiges Verriegelungselement 111 für die Hülse 101 der Fig. 15 und 16 dargestellt, welches einen Steckerteil 112 mit einem zylindrischen Abschnitt 113 und einem daran angeformten, topfförmigen Handgriff 114 mit einem Randwulst 115 umfasst. Der im wesentlichen zylindrische Steckerteil 112 ist an seinem freien Ende mit einem Randwulst 116 versehen, an welchen sich ein Abschnitt 117 verminderten äusseren Durchmessers anschliesst. Im Bereich des Handgriffs 114 weist der Steckerteil 112 ebenfalls einen Abschnitt 118 verminderten Aussendurchmessers mit einem ringförmigen Absatz 119 auf.

Die relativen Durchmesser verschiedener Abschnitte der Hülse 101 nach Fig. 15 und des Verriegelungselements 111 nach Fig. 13 sind vorzugsweise wie folgt gewählt:
- der Aussendurchmesser des zylindrischen Abschnitts 113 des Steckerteils 112 des Verriegelungselements 111 (Fig. 17) ist gleich wie oder minim kleiner als der Innendurchmesser des zylindrischen Teils 102 der Hülse 31 (Fig. 15);
- der Aussendurchmesser des Randwulstes 116 des Steckerteils 112 des Verriegelungselements 111 (Fig. 17) ist mindestens angenähert gleich dem Innendurchmesser der zylindrischen Innenfläche 106a der Hülse 101 an deren Ende mit dem Randwulst 105 (Fig. 15);
- die Umfangsnut 107 ist axial kürzer als der zylindrische Hülsenteil 102 jedoch länger als der Randwulst 105;
- der Absatz 119 des Steckerteils 112 des Verriegelungselements 111 (Fig. 17) entspricht dem Vorsprung 108 der Hülse 101 (Fig. 15) derart, dass der Vorsprung 108 und der Absatz 119 aufeinander zu liegen kommen können; und
- die Länge des Steckerteils 112 des Verriegelungselements 111 (Fig. 17) ist gleich gross wie die Gesamtlänge der Hülse 101 (Fig. 15).

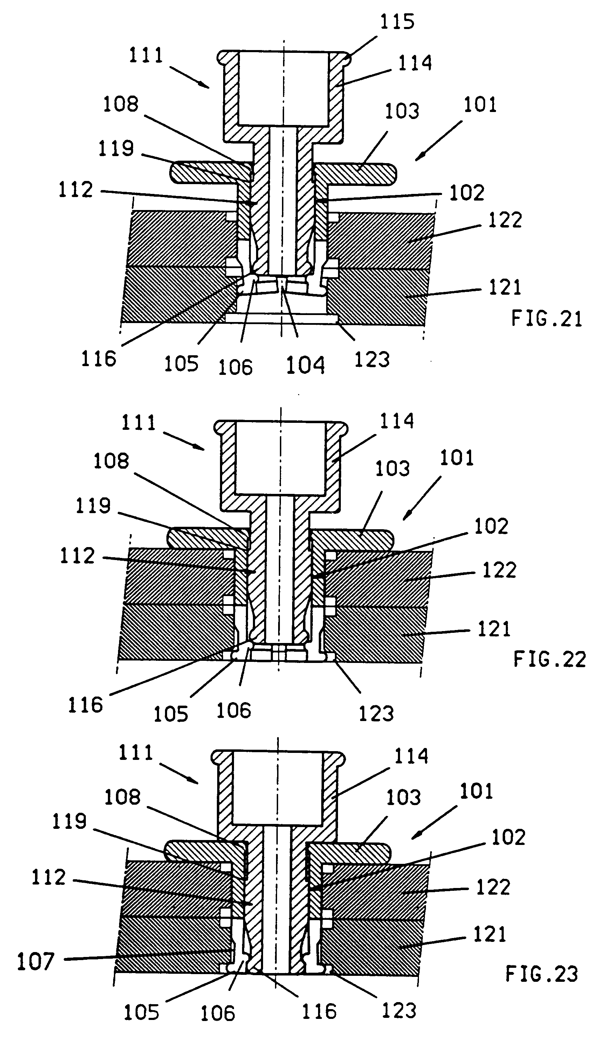

Demnach ist das Verriegelungselement 111 der Fig. 17 in die Hülse 101 der Fig. 15 steckbar, bis die Endfläche des Randwulstes 116 des Verriegelungselements 111 bündig mit der Endfläche des Randwulstes 105 der Hülse 101 ist bzw. bis die innere Fläche des Handgriffs 114 des Verriegelungselements 111 auf der äusseren Fläche des Flansches 103 der Hülse 101 aufliegt. Dieses Einstecken muss naturgemäss unter Ueberwindung eines gewissen, durch den Vorsprung 108 der Hülse 101 bewirkten mechanischen Widerstandes erfolgen. Der Vorsprung 108 der Hülse 101 zusammen mit dem Absatz 119 des Verriegelungselements 111 hat dabei zur Folge, dass das Verriegelungselement 111 und die Hülse 101 nicht mehr voneinander getrennt werden können, sondern nur noch über eine beschränkte Strecke relativ längsverschoben werden können, wie dies nachstehend anhand der Fig. 21 bis 23 erläutert wird. Beidseitige perspektivische Ansichten der vorliegenden Verbindungsvorrichtung mit dem in die Hülse 101 eingesteckten Verriegelungselement 111 sind in den Fig. 19 und 20 dargestellt.

In den Fig. 21 bis 23 ist in Längsschnitten die Funktionsweise der vorliegenden Verbindungsvorrichtung zur Verbindung von zwei stabförmigen Bauelementen 121 und 122 mit je einer durchgehenden Bohrung dargestellt. Hierbei sind die beiden Bauelemente 121, 122 in an sich bekannter Weise beidseitig an ihren Bohrungsenden mit einer ringförmigen Ausnehmung 123 versehen.

In Fig. 21 ist eine erste Lage der aus der Hülse 101 und dem Verriegelungselement 111 bestehenden Verbindungsvorrichtung dargestellt. Wie aus Fig. 21 hervorgeht, ist das stöpselförmige Verriegelungselement 111 bereits in die Hülse 101 eingesteckt, wie dies vorgängig erläutert wurde, und in dieser aufgrund des Vorsprungs 108 der Hülse 101 und des Absatzes 119 des Verriegelungselements 111 untrennbar, aber axial verschiebbar festgehalten. Beim Einschieben der Verbindungsvorrichtung in die Bohrungen der Bauelemente 121 und 122 gemäss Fig. 21 durch eine axiale Kraftausübung auf den Handgriff 114 des Verriegelungselements 111 verschiebt sich auch die Hülse 101, da der äussere Randwulst 116 des Verriegelungselements 111 auf den inneren ringförmigen Vorsprung 106 der Hülse 101 drückt, und da ein Zusammenfedern des den äusseren Randwulst 105 aufweisenden Endbereichs der Hülse 101 zufolge der Schlitze 104 ermöglicht ist.

Bei fortschreitender Längsbewegung gelangt die Hülse 101 in die in Fig. 22 dargestellte Endlage, in welcher einerseits der Randwulst 105 der Hülse 101 in die aussenseitige Ausnehmung 123 des Bauelements 121 elastisch eingerastet ist und andererseits der Flansch 103 der Hülse 101 auf der gegenüberliegenden Aussenseite des Bauelements 122 aufliegt. In dieser Lage sind die Bauelemente 121 und 122 durch die Hülse 101 zwar miteinander verbunden, wie dies an sich vorbekannt ist; eine Trennung der Bauelemente 121, 122 wäre jedoch mit geringer Kraftausübung in nachteiliger Weise möglich.

Zur Sicherung oder Verriegelung der durch die Hülse 101 bewirkten Verbindung der Bauelemente 121, 122 wird nun das Verriegelungselement 111 weiter in die Hülse 101 hineingedrückt. Dabei kann der äussere Randwulst 116 des Verriegelungselements 111 über den inneren Vorsprung 106 der Hülse 101 gleiten, weil sich das geschlitzte Hülsenende während dieses Vorgangs mit seinem äusseren Randwulst 105 radial in die Ausnehmung 123 des Bauelements 121 ausdehnen kann. Hiernach gelangt der Randwulst 116, wie dies aus Fig. 23 ersichtlich ist, auf die äussere Seite des inneren Vorsprungs 106 der Hülse 101, wobei das geschlitzte Hülsenende radial nach innen zurückschnappt.

Aufgrund der in Fig. 23 dargestellten Verbindungs- und Verriegelungslage ergeben sich die folgenden vorteilhaften Tatbestände:
- ein radial nach innen gerichtetes Zusammenfedern des offenen Endes der Hülse und damit ein Ausrasten des Randwulstes 105 der Hülse 101 aus der Ausnehmung 123 des Bauelements 121 ist durch die radiale Sperrung des Randwulstes 116 des starren Verriegelungselements 111 verunmöglicht;
- die genannte Sperrung ist durch keine, in irgend einer Weise auf die Bauelemente 121, 122 oder die Hülse 101 ausgeübte Trennkraft aufhebbar, weil der Handgriff 114 des Verriegelungselements 111 auf dem Flansch 103 der Hülse 101 aufliegt und somit die genannte Trennkraft die Sperrlage des Verriegelungselements 111 bezüglich der Hülse 101 nicht beeinflussen kann;
- die Endflächen des Bauelements 121, der Hülse 101 und des Verriegelungselements 111 liegen alle in der gleichen Ebene, so dass keine Behinderung für einen Weiterbau mit anderen Bauelementen vorhanden ist;
- die beiden Bauelemente 121, 122 sind durch das gegenüber der Umfangsnut 107 längere zylindrische Hülsenteil 102 gegeneinander zentriert; und
- alle Teil liegen geschlosssen und ohne störende Zwischenräume aufeinander.

Zum Lösen der in Fig. 23 dargestellten Verbindung der Bauelemente 121 und 122 ist nur die Massnahme möglich, durch Ziehen des Verriegelungselements 111 mittels des Handgriffs 114 einerseits das Verriegelungselement 111 bezüglich seiner Sperrlage aus der Hülse 101 zu bewegen, und andererseits die Hülse 101 aus den Bohrungen der Bauelemente 121, 122 zu entfernen. Bei dieser Ziehbewegung gleitet in einer ersten Phase der Randwulst 116 des Verriegelungselements 111 über den Vorsprung 106 der Hülse 101 (Fig. 23), was wegen der Umfangsnut 107 möglich ist, weil sich der äussere Randwulst 105 am Ende der Hülse 101 in die Ausnehmung 123 des Bauelements 121 radial ausdehnen kann. Beim weiteren Ziehen des Handgriffs 114 kommt der Absatz 119 des Verriegelungselements 111 zum Anliegen an den Vorsprung 108 der Hülse 101, so dass bei fortgesetztem Ziehen des Handgriffs 114 die Hülse 101 aus den Bohrungen der Bauelemente 121 und 122 gezogen wird.

Aus den Darstellungen der Fig. 21 bis 23 ist auch ersichtlich, dass die Abschnitte verminderten Durchmessers der Hülse 101 und des Verriegelungselements 111 (Nut 107 in Fig. 15 bzw. Abschnitt 117 in Fig. 17) eine hinderungsfreie Betätigung der vorliegenden Verbindungsvorrichtung sicherstellen.

Die vorgängigen Erläuterungen lassen erkennen, dass nicht nur der Aufbau der erfindungsgemässen Verbindungsvorrichtung, insbesondere im Hinblick auf die erforderlichen Werkzeuge zu deren Herstellung aus einem Kunststoff, sehr einfach ist, sondern dass auch die Handhabung der Verbindungsvorrichtung nicht die geringsten Probleme auch für ungeübte Benützer wie Kleinkinder bietet. Hierbei ist hervorzuheben, dass das Erreichen der beschriebenen Verriegelungslage sowohl spürbar als auch hörbar ist, und dass die zum Einstecken bzw. Ausziehen der Verbindungsvorrichtung erforderlichen Kräfte gering sind, obwohl eine absolut feste Verriegelung erzielt wird.

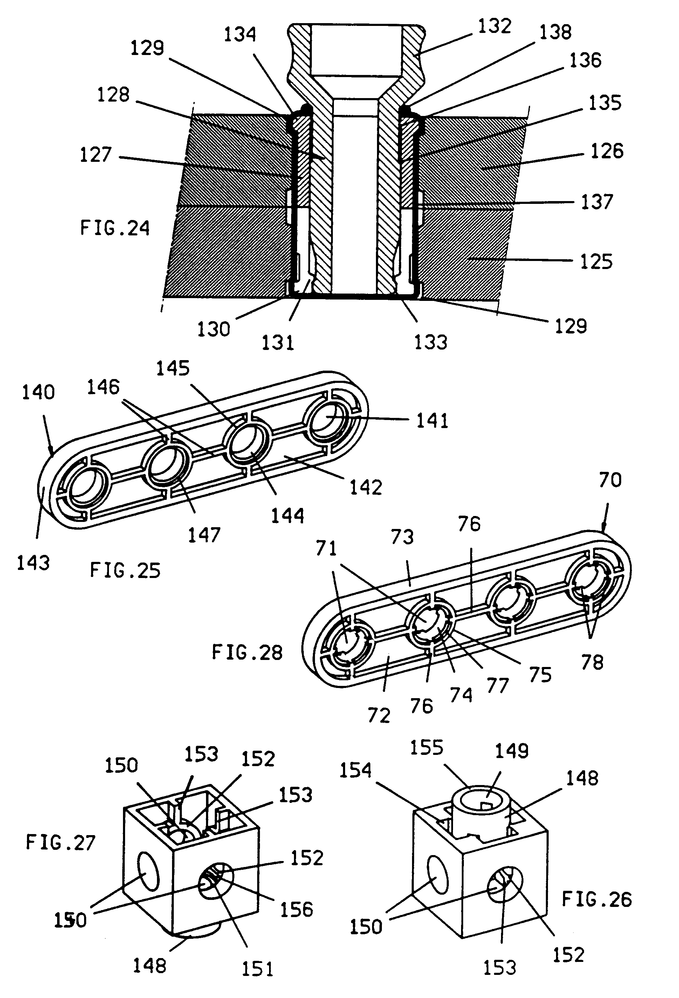

Wenn die erfindungsgemässe Verbindungsvorrichtung für Spielzeug-Bauelemente nicht in einem Wohnraum sondern im Freien zur Anwendung gelangt, kann unter widrigen Umständen die Gefahr bestehen, dass unter der Einwirkung von Wasser, Schmutz, Sand und dergleichen die bestimmungsgemässe Funktion der beschriebenen Verbindungsvorrichtung beeinträchtigt wird und eine solche nicht mehr möglich ist. Um derartige Anwendungsfälle zu berücksichtigen, kann die erfindungsgemässe Verbindungsvorrichtung gemäss der in Fig. 24 dargestellten Ausführungsform ausgebildet sein.

Gemäss Fig. 24 sind zwei je eine zylindrische Bohrung aufweisende Bauelemente 125 und 126 durch eine Verbindungsvorrichtung zusammengehalten, welche widerum eine in die Bohrungen der Bauelemente 125, 126 gesteckte Hülse 127 und ein in die Hülse 127 gestecktes Verriegelungselement 128 umfasst. Wie bereits vorgängig beschrieben, weisen die Bauelemente 125, 126 an ihren Bohrungsrändern beidseitig ringförmige Ausnehmungen 129 auf. Die Hülse 127 ist in ihrem Endbereich wiederum geschlitzt und an ihrem Ende mit einem äusseren Randwulst 130 sowie auf ihrer Innenseite mit einem ringförmigen Vorsprung 131 versehen. Das Verriegelungselement 128 hat einen Handgriff 132 und am offenen Ende seines zylindrischen Teils einen äusseren Randwulst 133. Die Ausbildung der Verbindungsvorrichtung der Fig. 24 entspricht demnach bezüglich des Aufbaus im wesentlichen und in der Funktion vollständig der Ausführungsform der Fig. 15 bis 23.

Unterschiedlich gegenüber der Ausführungsform der Fig. 15 bis 23 ist einmal das Fehlen des Flansches 103 der Hülse 101 in Fig. 15. Statt dessen weist die Hülse 127 gemäss Fig. 24 einen weiteren Randwulst 134 auf, der in der ringförmigen Ausnehmung 129 des anderen Bauelements 126 liegt und deshalb die gleiche Anschlagfunktion wie der Flansch 103 ausübt.

Unterschiedlich ist ferner, dass über die zusammengesteckte Einheit der Hülse 127 und des Verriegelungselements 128, welche in axialer Richtung beschränkt durch einen Absatz 135 des Verriegelungselements 128 und einen ringförmigen inneren Vorsprung 136 der Hülse 127 gegeneinander verschiebbar sind, eine elastische Kappe 137 gestülpt ist, welche zum Festhalten auf dieser Einheit einen auf dem Endbereich der Hülse 127 und des Handgriffs 132 der Verriegelungsvorrichtung 128 aufliegenden Randwulst 138 hat. Die elastische Kappe 137 kann aus Kautschuk oder einem elastischen Kunststoff bestehen.

Die Funktionsweise der in Fig. 24 dargestellten Verbindungsvorrichtung stimmt mit den vorgängigen Erläuterungen anhand der Fig. 21 bis 23 überein. Hierbei bleibt die Einheit der Hülse 127 und des Verriegelungselements 128 immer von der Kappe 137 dicht umgeben, auch dann, wenn das Verriegelungselement 128 in der Hülse 127 um die durch den Absatz 135 und den inneren Vorsprung 136 gegebene Strecke axial verschoben wird. Somit ist die genannte Einheit praktisch vollständig gegen das Eindringen von Fremdstoffen zwischen die Hülse 127 und das Verriegelungselement 128 geschützt.

Mit der erfindungsgemässen Verbindungsvorrichtung zu verbindende Bauelemente, insbesondere Spielzeug-Bauelemente, welche zu einem Bausatz gehören und welche mindestens eine zylindrische Bohrung einheitlichen Durchmessers aufweisen, können selbstverständlich praktisch beliebige, in den betreffenden Bausatz passende Ausbildungsformen haben, also beispielsweise die Formen von prismatischen Bausteinen verschiedener Grössen, Stäben, Balken, Platten usw.

Fig. 25 stellt die perspektivische Ansicht eines Stabes 140 mit vier Bohrungen 141 dar, welche in einem Abstand von 1 M (M = Modul des betreffenden Bausatzes) liegen, wobei der Stab 140 eine Gesamtlänge von 4 M und eine Breite von 1 M hat. Aus Herstellungs- und Materialersparnisgründen ist der Stab 140 nicht aus vollem Material gefertigt. Vielmehr weist er eine relativ dünne Trennwand 142 und einen angeformten, äusseren Rand 143 auf, welcher die Dicke von 1/4 M des Stabes 140 bestimmt. Jede Bohrung 141 ist durch einen hülsenförmigen, an die Trennwand 142 angeformten, zylindrischen Teil 144 bestimmt, der von einem äusseren Verstärkungsring 145 umgeben ist. Die Verstärkungsringe 145 sind unter sich und mit dem Rand 143 durch angeformte Verstärkungsstege 146 verbunden, wobei der Rand 143, die Ringe 145 und die Stege 146 beidseitig der Trennwand 142 Aussenflächen haben, die in gleichen Ebenen liegen. In axialer Richtung ist die Länge des zylindrischen Teils 144 jeder Bohrung 141 kleiner als die Gesamtdicke von 1/4 M des dargestellten Stabes 140, so dass an den Bohrungsenden beidseitig der Trennwand 142 je eine ringförmige Ausnehmung 147 vorliegt. Unter Bezugnahme auf die Fig. 21 bis 23 ist eine solche ringförmige Ausnehmung 147 zur Aufnahme des Randwulstes 105 der Hülse 101 der Fig. 15 bestimmt.

Um zwei Stäbe gemäss Fig. 25 miteinander zu verbinden, wird demnach beispielsweise eine Verbindungsvorrichtung gemäss Fig. 21 verwendet, bei welcher der Hülsenteil 102 der Hülse 101 eine Länge einschliesslich Randwulst 105 von 1/2 M (zweimal die Dicke jedes Stabs der Fig. 25) hat. Wird eine Verbindungsvorrichtung gemäss Fig. 24 verwendet, so beträgt die Gesamtlänge der Hülse 127 einschliesslich der beiden Randwülste 130 und 134 ebenfalls angenähert 1/2 M.

Ein weiteres Bauelement in der Form eines prismatischen Bausteins ist in den Fig. 26 und 27 dargestellt. Wie ersichtlich besteht der Baustein im wesentlichen aus einem Würfel mit einer Kantenlänge von 1 M (M = Modul des Bausatzes), wobei der Baustein in an sich bekannter Weise als einseitig offener Hohlkörper ausgebildet ist. Auf der der offenen Seite gegenüberliegenden Seite ist der Baustein in ebenfalls an sich bekannter Weise mit einem angeformten Kupplungszapfen 148 versehen, derart, dass der Baustein beidseitig mit anderen, ähnlichen Bauelementen durch Aufstecken gekuppelt werden kann.

Der Kupplungszapfen 148 sowie die vier seitlichen Wände des Bausteins sind je mit einer Bohrung 149 bzw. 150 versehen, die alle den gleichen Durchmesser haben. Wie aus Fig. 27 ersichtlich ist, ist das innere Ende des in den Hohlraum des Bausteins ragenden Kupplungszapfens 148 mit einer ringförmigen Ausnehmung 151 versehen. Unterschiedlich dazu enden die seitlichen Bohrungen 150 im Hohlraum des Bausteins mit glatten Aussenflächen eines angeformten Ringansatzes 152. Jeder Ringansatz 152 ist zudem mit einer sich zum Rand der offenen Seite des Bausteins erstreckenden Rippe 153 versehen. Die vier Rippen 153 bewirken einerseits eine Verstärkung der durch die Bohrungen 150 etwas geschwächten Seitenwände des Bausteins und bilden gleichzeitig Gegenkupplungsorgane für das Kuppeln des Bausteins mit dem Kupplungszapfen eines anderen Bauelements. Die aus Fig. 26 ersichtlichen Oeffnungen 154 sind einzig aus fabrikatorischen Gründen zur Eliminierung unnötiger bzw. nachteiliger Materialansammlungen vorgesehen. Selbstverständlich ist der Baustein der Fig. 26, 27 einstückig aus einem Kunststoffmaterial gefertigt.

Beim Baustein der Fig. 26, 27 können demnach an fünf seiner Seiten weitere Bauelemente mittels der erfindungsgemässen Verbindungsvorrichtung angebracht werden, wobei auf der Seite des Kupplungszapfens 148 das zu verbindende Bauelement auf dem Kupplungszapfen 148 aufliegen wird. Entsprechend den vorgängigen Erläuterungen beträgt demnach die Länge des Kupplungszapfens 148 von seiner Aussenstirnfläche 155 bis zu seiner Innenstirnfläche 156 (das heisst dem Aussenrand der Ausnehmung 151) 1/2 M. Andererseits ist bei den seitlichen Bohrungen 150 die Wandstärke von der Wandaussenseite bis zur Endfläche der Ringansätze 152 gleich 1/4 M minus die axiale Breite des Randwulstes 105 der Hülse 101 der Fig. 15. Die unterschiedliche Ausbildung der Auflageflächen für den geschlitzten Randwulst der vorliegenden Verbindungsvorrichtung bei den Bohrungen 149 bzw. 150 wurde ausschliesslich aus Gründen der Platzknappheit im Hohlraum des Bausteins gewählt.

Der Stab 70 nach Fig. 28 unterscheidet sich vom Stab 140 nach Fig. 25 nur dadurch, dass in jede Ausnehmung 77 vier Nocken 78 angeformt sind, welche im dargestellten Ausführungsbeispiel in Verlängerung der Verstärkungsstege 76 liegen. Diese Nocken 78 entsprechen den Nocken 24 bei der Ausführungsform nach Fig. 7 bis 12 und haben dieselbe Funktion. Die Teile mit den Bezugszeichen 71 bis 77 des Stabes 70 entsprechen den Teilen mit den Bezugszeichen 141 bis 147 des Stabes 140. Zwei Stäbe 70 können miteinander durch eine Verbindungsvorrichtung nach Fig. 5 in der anhand der Fig. 7 bis 12 beschriebenen Art verbunden werden.

## Patentansprüche

1. Lösbare Verbindungsvorrichtung zur Verbindung mindestens zweier Spielzeug-Bauelemente (21,22;125,126), die je eine Bohrung aufweisen, mit einer zur Einführung in die Bohrung der Bauelemente (21,22:125,126) bestimmten Hülse (1, 101), welche einen zylindrischen Schaftabschnitt (2,102) und in ihrem einen Endteil (4,104a) zur Erzielung einer radialen Elastizität Längsschlitze (3,104) aufweist und welche am freien Ende dieses Endteils (4,104a) einen radial vorstehenden, schmalen, äusseren Randwulst (5,105) aufweist, der dazu bestimmt ist, nach dem Einführen der Hülse (1,101) in die Bohrungen der Bauelemente (21,22;125,126) das eine Bauelement formschlüssig zu hintergreifen, sowie mit einem Anlageflansch (12,103) an dem dem Randwulst (5,105) abgewandten Ende des zylindrischen Schaftabschnittes (2,102), dadurch gekennzeichnet, dass in die Hülse (1,101) ein bolzenförmiges Verriegelungselement (9,111) unverlierbar eingesetzt ist, das relativ zur Hülse (1,101) in zwei Stellungen bewegbar ist, wobei in der ersten Stellung ein Endabschnitt (14,116) am freien Ende des Verriegelungselementes (9,111) die Innenfläche (8,106a) der Hülse (1,101) im Bereich der Radialebene des Randwulstes (5,105) von innen berührt und in der zweiten Stellung von der Innenfläche (8,106a) der Hülse (1,101) im Bereich der Radialebene des Randwulstes (5,105) Abstand hat.

2. Verbindungsvorrichtung nach Anspruch 1, dadurch gekennzeichnet, dass zwischen dem Randwulst (5,105) und dem zylindrischen Schaftabschnitt (2,102) eine äussere Umfangsnut (6,107) angeordnet ist, und dass die axiale Länge der Umfangsnut (6,107) geringer als die axiale Länge des zylindrischen Schaftabschnittes (2,102) der Hülse (1,101) und grösser als die axiale Länge des Randwulstes (5,105) ist.

3. Verbindungsvorrichtung nach Anspruch 2, dadurch gekennzeichnet, dass an der Innenwand der Hülse im Bereich der Radialebene des Randwulstes (5,105) ein nach radial innen ragender Vorsprung (8',106) angeordnet ist, über welchen der Endabschnitt (14,116) bei der Bewegung des Verriegelungselementes (9,111) von der zweiten in die erste Stellung gleitet, so dass das Verriegelungselement in der ersten Stellung gesichert ist.

4. Verbindungsvorrichtung nach einem der Ansprüche 1 bis 3, dadurch gekennzeichnet, dass am Verriegelungselement (9,111) an dem dem Endabschnitt (14,116) gegenüberliegenden Ende ein Handgriff (11,114) angeformt ist.

5. Verbindungsvorrichtung nach einem der Ansprüche 1 bis 4, dadurch gekennzeichnet, dass der Randwulst (5,105) in der zweiten Stellung des Verriegelungselementes (9,111) radial über den Aussendurchmesser des zylindrischen Schaftabschnittes (2,102) vorsteht, und dass der Endabschnitt (14, 116) in der ersten Stellung des Verriegelungselementes (9, 111) das Endteil (4,104a) der Hülse (1,101) gegen radiale Einfederung sichert.

6. Verbindungsvorrichtung nach einem der Ansprüche 1 bis 5, dadurch gekennzeichnet, dass das Verriegelungselement (9) in der Hülse (1) drehbar und zumindest in seiner ersten Stellung axial unverschiebbar gehalten ist, und dass der Endabschnitt am freien Ende des Verriegelungselementes (9) durch eine der Anzahl der Längsschlitze (3) entsprechende Anzahl von Rippen (14) gebildet ist.

7. Verbindungsvorrichtung nach den Ansprüchen 4 und 6, dadurch gekennzeichnet, dass der Handgriff (11) einen hülsenförmigen Körper und an diesen angeformte Flügel (17) aufweist, und dass die zylindrische Innenwand des hülsenförmigen Körpers mit ringförmigen Nutabschnitten (18) versehen ist, welche durch in Umfangsrichtung kürzere Abschnitte (19) der zylindrischen Innenwand des hülsenförmigen Körpers getrennt sind, derart, dass in den hülsenförmigen Körper des Handgriffs (11) eine weitere, gleiche Verbindungsvorrichtung mit ihrer Hülse (1) und deren geschlitztem Randwulst (5) einsteckbar und befestigbar ist.

8. Verbindungsvorrichtung nach Anspruch 6 oder 7, dadurch gekennzeichnet, dass die Hülse (1) Drehsicherungsmittel zum drehfesten Eingriff mit dem einen Bauelement (21,22) aufweist.

9. Verbindungsvorrichtung nach einem der Ansprüche 6 bis 8, dadurch gekennzeichnet, dass der Anlageflansch (12) am Verriegelungselement (9) angeformt ist.

10. Verbindungsvorrichtung nach einem der Ansprüche 1 bis 5, dadurch gekennzeichnet, dass das Verriegelungselement (111) in der Hülse (101) axial verschiebbar ist, und dass der Anlageflansch (103) an der Hülse (101) angeformt ist.

11. Verbindungsvorrichtung nach Anspruch 10, dadurch gekennzeichnet, dass das Verriegelungselement (111) mit einem ringförmigen, äusseren Absatz (119) und die Hülse (101) mit einem entsprechenden, inneren Absatz (108) versehen sind, um das Verriegelungselement (111) mit der Hülse (101) unverlierbar, aber axial verschiebbar zu verbinden.

12. Verbindungsvorrichtung nach Anspruch 10 oder 11, dadurch gekennzeichnet, dass über die Hülse (127) eine aus einem elastischen Material bestehende, dünnwandige Kappe (137) gestülpt ist, welche die Hülse (127) und das Verriegelungselement (128) auf der Umfangsseite und an dem die Längsschlitze aufweisenden Hülsenende abdichtet.

13. Spielzeug-Bauelement für eine lösbare Verbindungsvorrichtung gemäss einem der Ansprüche 6 bis 9, mit mindestens einer zylindrischen Bohrung (71) zur Aufnahme der zylindrischen Hülse (1) der Verbindungsvorrichtung und mit Randbereichen (77) der zylindrischen Bohrung (71) zur Aufnahme des Randwulstes (5) der Hülse (1) der Verbindungsvorrichtung, dadurch gekennzeichnet, dass das Bauelement (21,22,70) Eingriffsmittel (24,78) für die in seine zylindrische Bohrung eingeführte Hülse (1) der Verbindungsvorrichtung aufweist, welche Eingriffsmittel (24,78) eine axiale Bewegung der Hülse (1) in der zylindrischen Bohrung (71) erlauben, jedoch eine Drehbewegung der vollständig in die zylindrische Bohrung (71) eingeführten Hülse (1) sperren, dass als Eingriffsmittel am Rand der zylindrischen Bohrung (71) mindestens ein axial vorstehender und sich radial nach aussen erstreckender Nocken (24,78) angeformt ist, und dass das Bauelement am Rand der zylindrischen Bohrung mit einer radial äusseren, ringförmigen Ausnehmung (23,77) zur Aufnahme des Randwulstes (5) der Hülse (1) versehen ist, wobei der Nocken (24,78) in der ringförmigen Ausnehmung (23,77) angeformt ist.

## Claims

1. A detachable connection device for connecting at least two toy-construction elements (21, 22; 125, 126) each provided with a bore, said connection device including a socket (1, 101) for inserting into the bores of said construction elements (21, 22; 125, 126), said socket having a cylindrical shaft section (2, 102), an end part (4, 104a) of said shaft section provided with longitudinal slots (3, 104) thereby rendering said end part radially elastic, a free end of said end part (4, 104a) provided with a radially protruding outer edge shoulder (5, 105) dimensioned to engage form lockingly one of said construction elements (21, 22; 125, 126) after the insertion of the socket (1, 101) into the bores of the construction elements, an engagement flange (12, 103) at the end of the shaft section (2, 102) opposite said edge shoulder (5, 105) characterized in that a locking element (9, 111) is provided inserted unremovably into said socket (1, 101) and movable relative to said socket (1, 101) between two positions, wherein in a first position an end section (14, 116) at the free end of said locking element (9, 111) engages the inner face (8, 106a) of said socket (1, 101) in the area of the radial plane of the edge shoulder (5, 105) and in the second position said locking element is spaced a distance from the inner face (8, 106a) of said socket (1, 101) in the area of the radial plane of said edge shoulder (5, 105).

2. A connection device in accordance with claim 1, characterized in that an outer circumferential groove (6, 107) is provided between said edge shoulder (5, 105) and said cylindrical shaft section (2, 102) and the axial length of said circumferential groove (6, 107) is less than the axial length of said cylindrical shaft section (2, 102) of said socket (1, 101) and larger than the axial length of said edge shoulder (5, 105).

3. A connection device in accordance with claim 2, characterized in that a radially inwardly directed protrusion (8', 106) is provided on the inner wall of said socket in the area of the radial plane of said edge shoulder (5, 105) over which the end section (14, 116) slides during the movement of the locking element (9, 111) from the second into the first position whereby said locking element is secured in the first position.

4. A connection device in accordance with one of claims 1 to 3, characterized in that a handle (11, 114) extends on said locking (9, 111) element at the end opposite of said end section (14, 116).

5. A connection device in accordance with one of claims 1 to 4, characterized in that said edge shoulder (5, 105) protrudes radially over the outer diameter of the cylindrical shaft section (2, 102) when said locking element (9, 111) is in said second position and said end section (14, 116) secures said end part (14, 116) of said socket (1, 101) against radial inward displacement when said locking element (9, 111) is in said first position.

6. A connection device in accordance with one of claims 1 to 3, characterized in that said locking element (9) is rotatable in said socket (1) and held axially fixed at least in its first position and that said end section at the free end of said locking element (9) is formed by a number of ribs (14) corresponding to the number of longitudinal slots (3).

7. A connection device in accordance with claims 4 and 6, characterized in that the handle (11) is provided with a socket like body and wings (17) extended thereon, a cylindrical inner wall of said socket like body is provided with annular like groove sections (18) which are separated in the circumferential direction by rib sections (19) of said cylindrical inner wall of said socket like body in such a manner that a further identical connection device with its socket (11) and slotted edge shoulder (5) may be inserted in said socket like body of said handle (11).

8. A connection device in accordance with claim 6 or 7, characterized in that said socket (1) is provided with means for securing against rotation with respect to one of said construction elements (21, 22).

9. Connection device in accordance with any one of claims 6 to 8, characterized in that said engagement flange (12) extends on said locking element (9).

10. A connection device in accordance with one of claims 1 to 5, characterized in that said locking element (111) is axially displaceable in said socket (101) and that said engagement flange (103) extends on said socket (101).

11. A connection device in accordance with claim 10, characterized in that said locking element (111) is provided with an annular outer offset (119) and said socket (101) is provided with a corresponding inner offset (108), so as to connect said locking element (111) with said socket (101) undetachably, but axially displaceable.

12. A connection device in accordance with claim 10 or 11, characterized in that a thin walled cap (137) formed of an elastic material is placed over said socket (127), whereby said cap seals said socket (127) and said locking element (128) on the circumferential face and at the socket end which has the longitudinal slots.

13. A toy construction element for use with a connection device in accordance with any one of claims 6 to 9 and having a cylindrical bore (71) for receiving the cylindrical socket (1) of the connection device and an edge area (77) of the cylindrical bore (71) for receiving the edge shoulder (5) of said socket (1), characterized in that said construction element is provided with engagement means (24, 78) for said socket (1) when introduced into said cylindrical bore of the connection device, whereby said engagement means (24, 78) permits an axial movement of said socket (1) in said cylindrical bore (71) but prevents a rotating movement of said socket, when completely introduced in said bore (71), that said engagement means comprises an axially protruding and axially outwardly extending cam (24, 78) extending on an edge portion of said cylindrical bore (71), and that a radial outer annular like recess (23, 77) is provided at the edge of the cylindrical bore for receiving said edge shoulder (5) of the socket (1), said cam (24, 78) extending in said annular like recess (23, 77).

## Revendications

1. Dispositif de jonction amovible, permettant de réunir au moins deux éléments de jouet (21, 22; 125, 126) à assembler comportant chacun un alésage, ce dispositif comprenant, d'une part, une douille (1, 101) qui est destinée à être introduite dans l'alésage des éléments à assembler (21, 22; 125, 126) et comprend un tronçon de tige cylindrique (2, 102) et, dans l'une de ses parties d'extrémité (4, 104a), des fentes longitudinales (3, 104) permettant d'obtenir une élasticité radiale et qui, à l'extrémité libre de cette partie d'extrémité (4, 104a), comporte un bourrelet périphérique extérieur étroit qui fait sallie radialement et qui sert, après l'introduction de la douille (1, 101) dans les alésages des éléments assemblés (21, 22; 125, 126), à s'accrocher, par complémentarité de formes, derrière l'un des éléments à assembler et, d'autre part, une collerette d'appui (12, 103) située à l'extrémité du tronçon de tige cylindrique (2, 102) qui est située à l'opposé du bourrelet périphérique (5, 105), caractérisé en ce que, dans la douille (1, 101), est placé, d'une manière inamovible, un élément de verrouillage (9, 111) en forme de fiche qui est agencé de manière à pouvoir être déplacé dans deux positions vis-à-vis de la douille (1, 101), d'une façon telle que, dans la première position, un tronçon d'extrémité (14, 116) situé à l'extrémité libre de l'élément de verrouillage (9, 111) vient de l'intérieur au contact de la surface intérieure (8, 106a) de la douille (1, 101) dans la zone du plan diamétral du bourrelet périphérique (5, 105) et que, dans la seconde position, ce tronçon d'extrémité (14, 116) est espacé de la surface intérieure (8, 106a) de la douille (1, 101) dans la zone du plan diamétral du bourrelet périphérique (5, 105).

2. Dispositif de jonction suivant la revendication 1, caractérisé en ce qu'une gorge circonférentielle extérieure (6, 107) est ménagée entre le bourrelet périphérique (5, 105) et le tronçon de tige cylindrique (2, 102) et en ce que la longueur axiale de la gorge circonférentielle (6, 107) est inférieure à la longueur axiale du tronçon de tige cylindrique (2, 102) de la douille (1, 101) et supérieure à la longueur axiale du bourrelet périphérique (5, 105).

3. Dispositif de jonction suivant la revendication 2, caractérisé en ce que, sur la paroi intérieure de la douille et dans la zone du plan diamétral du bourrelet périphérique (5, 105), est disposée une partie en saillie (8', 106) qui fait saillie radialement vers l'intérieur et sur laquelle, lors du déplacement de l'élément de verrouillage (9, 111), le tronçon d'extrémité (14, 116) glisse de la seconde position à la première position, de sorte que l'élément de verrouillage est immobilisé dans la première position.

4. Dispositif de jonction suivant l'une des revendications 1 à 3, caractérisé en ce qu'un élément d'actionnement manuel (11, 114) est réalisé au formage sur l'élément de verrouillage (9, 111), à son extrémité opposée au tronçon d'extrémité (14, 116).

5. Dispositif de jonction suivant l'une des revendications 1 à 4, caractérisé en ce que, dans la seconde position de l'élément de verrouillage (9, 111), le bourrelet périphérique (5, 105) fait saillie radialement au-delà du diamètre extérieur du tronçon de tige cylindrique (2, 102) et en ce que, dans la première position de l'élément de verrouillage (9, 111), le tronçon d'extrémité (14, 116) empêche la partie d'extrémité (4, 104a) de la douille (1, 101) de jouer élastiquement dans le sens radial.

6. Dispositif de jonction suivant l'une des revendications 1 à 5, caractérisé en ce que l'élément de verrouillage (9) est maintenu dans la douille (1) de façon à pouvoir tourner et sans pouvoir être déplacé axialement au moins dans sa première position et en ce que le tronçon d'extrémité situé à l'extrémité libre de l'élément de verrouillage (9) est constitué de nervures (14) dont le nombre correspond au nombre des fentes longitudinales (3).

7. Dispositif de jonction suivant l'une des revendications 4 et 6, caractérisé en ce que l'élément d'actionnement manuel (11) comporte un corps en forme de manchon et des ailes (17) réalisées au formage sur ce corps et en ce que la paroi intérieure cylindrique du corps en forme de manchon est pourvue de sections de gorge annulaire (18) qui sont séparées par des sections (19), plus courtes dans la direction circonférentielle, de la paroi intérieure cylindrique du corps en forme de manchon, d'une façon telle qu'un autre dispositif de jonction identique, comportant une douille (1) et un bourrelet périphérique (5) de cette douille qui est fendu, peut être emboîté et fixé dans le corps en forme de manchon de l'élément d'actionnement manuel (11).

8. Dispositif de jonction suivant l'une des revendications 6 et 7, caractérisé en ce que la douille (1) comporte des moyens d'immobilisation en rotation permettant d'assurer un calage en rotation sur un premier élément à assembler (21, 22).

9. Dispositif de jonction suivant l'une des revendications 6 à 8, caractérisé en ce que la collerette d'appui (12) est réalisée au formage sur l'élément de verrouillage (9).

10. Dispositif de jonction suivant l'une des revendications 1 à 5, caractérisé en ce que l'élément de verrouillage (111) est agencé de façon à pouvoir être déplacé en translation axiale dans la douille (101) et en ce que la collerette d'appui (103) est réalisée au formage sur la douille (101).

11. Dispositif de jonction suivant la revendication 10, caractérisé en ce que l'élément de verrouillage (111) est pourvu d'un épaulement annulaire extérieur (119) et la douille (101) est pourvue d'un épaulement intérieur (108) correspondant, afin de réunir l'élément de verrouillage (111) à la douille (101) d'une manière inamovible, en permettant toutefois un déplacement en translation axial.

12. Dispositif de jonction suivant l'une des revendications 10 et 11, caractérisé en ce qu'un capuchon (137) en matière élastique et de faible épaisseur est enfilé par-dessus la douille (127), ce capuchon (137) assurant l'étanchéité de l'élément de verrouillage (128) à sa périphérie et sur l'extrémité de la douille qui comporte les fentes longitudinales.

13. Elément de jouet à assembler, avec dispositif de jonction séparable suivant l'une des revendication 6 à 9, comprenant au moins un alésage cylindrique (71), destiné à recevoir la douille cylindrique (1) du dispositif de jonction, et des zones marginales (77) de l'alésage cylindrique (71) destinées à recevoir le bourrelet périphérique (5) de la douille (1) du dispositif de jonction, caractérisé en ce que l'élément à assembler (21, 22, 70) comporte des moyens (24, 78) de venue en prise sur la douille (1) du dispositif de jonction lorsqu'elle est introduite dans l'alésage cylindrique de l'élément à assembler, ces moyens de venue en prise (24, 78) permettant un déplacement axial de la douille (1) dans l'alésage cylindrique (71), mais bloquant un mouvement de rotation de la douille (1) lorsqu'elle est totalement introduite dans l'alésage cylindrique (71), en ce que, comme moyens de venue en prise, est réalisé au formage, sur le bord de l'alésage cylindrique (71), au moins un bossage (24, 78) qui fait saillie axialement et s'étend radialement vers l'extérieur et en ce que, sur le bord de l'alésage cylindrique, l'élément à assembler est pourvu d'un épaulement annulaire radialement extérieur (23, 77) servant à recevoir le bourrelet périphérique (5) de la douille (1), le bossage (24, 78) étant réalisé au formage sur l'épaulement annulaire (23, 77).
